# EUROPEAN PATENT APPLICATION

(11) **EP 2 157 555 A1**
(43) Date of publication of application: **24.02.2010**
(21) Application number: 09275064.5
(22) Date of filing: 20.08.2009
(51) Int. Cl.: G07F 17/32

(54) **Interactive scratch card game**

(30) Priority: 20.08.2008 GB 0815149
(71) Applicant: Million21 Limited, Ashton Under Lyne, Greater Manchester OL7 0QQ (GB)
(72) Inventor: Sheffield, Chris, Near Crewe, Cheshire CW12 4TE (GB)
(74) Representative: Wilson Gunn

(57) **Abstract**

A scratch card 12 for use in an interactive game comprises a plurality of masked panels 1-11 provided on a card 12. The masked panels 1-11 comprise metal foil that may be scratched off by a player. Panel 11 is a master panel and masks a game code and a contact number, Panels 1-10 by contrast are award panels and mask symbols or the like relating to a particular prize. Once master panel 11 is scratched off the player may then send an SMS message incorporating the game code to the contact number. In response the player will receive a message indicating: that the scratch card 12 is not a winner; or that the scratch card 12 is a winner and which of panels 1-10 should be unmasked to reveal the nature of the award; or that the player has won an award. In the event that the player has won, the received message or the scratch card 12 may contain instructions for redeeming the award and/or a request to communicate further details to claim the award.

## Description

The present invention relates to an interactive scratch card game and a system for implementing such an interactive scratch card game.

A common form of gambling game is provided by means of a scratch card. In such games, a printed scratch card is provided with a design and one or more masking panels, typically comprising metal foil. The masking panels may mask symbols or the like indicating whether a particular card is a winner. The player removes the masking panels, typically by scratching with a coin or similar, thus revealing one or more symbols and/or a message indicating whether they have won or lost. A player may then redeem any winnings from the scratch card distributor or their agents. Such games have a limited element of player interaction and may thus become unappealing over time.

It is an object of the present invention to provide a more interactive scratch card game and a system for implementing such an interactive scratch card game.

According to a first aspect of the present invention there is provided a system for implementing an interactive scratch card game wherein each scratch card is provided with one or more masked panels and at least one game code, the system comprising: a receiver suitable for receiving a communicated game code and identifying the sender thereof; control means for determining whether the game code is a winning game code and generating a suitable message in response thereto; and a message transmitter suitable for transmitting said generated message to the identified sender.

According to a second aspect of the present invention there is provided a method of running an interactive scratch card game comprising the steps of: receiving a communicated game code; identifying the sender of the game code; determining whether the game code is a winning game code and generating a suitable message in response thereto; transmitting said generated message to the identified sender.

In this way a player may obtain a game code from a scratch card and communicate it via a mobile communications network, receiving a message in return indicating whether the scratch card is a winning card.

The game code and or the generated messages may be communicated via a mobile communications network. This allows the game code to be communicated by and the generated messages received by a mobile communication device such as a mobile telephone. The game code may be transmitted in a text or data based format such as an SMS message, MMS message or similar. Alternatively, the game code may be communicated during a telephone call by voice recognition or tone recognition. The communicated game code and/or sender identity may need to be extracted from extraneous information by means of a suitable parser unit. The scratch card may provide a contact number to facilitate the communication of the game code.

A player may be charged for communicating the game code and/or receiving a generated message. The charging may be carried out by the player's network operator. In such cases, awards may be credited to a player's network account by the player's network operator.

In one preferred embodiment, the charging may be carried out by reverse SMS billing. In a typical such process upon player communication of the game code, the control means generates a return message containing SMS details directing the terminal to send an SMS message incorporating a suitable keyword and reference to a particular contact number. Upon sending the SMS the player's network operator debits their network account and passes on a percentage of the amount debited to the game operator. When the SMS is received, the control unit may check the keyword and the reference to authenticate the message. Upon authentication, the control means may proceed to determining whether the game code is a winning game code as above.

The scratch card may comprise one or more masked panels. The masked panels may each comprise metal foil provided over an area of the scratch card. Each panel may mask a unique game code. Alternatively, a single game code and/or the contact number may be directly displayed on the scratch card or may be provided behind a master masked panel. In such cases the scratch card may provide an indication that this is a master panel and should be unmasked first. The scratch card may also comprise a plurality of award panels, each panel masking an award symbol. The award symbols may indicate whether or not an award has been won and/or the nature of the award.

There may be a single generated message or a succession of generated messages. The generated message or messages may indicate directly whether the scratch card is a winner. Alternatively, the generated message or messages may direct a player to unmask one or more award panels. The generated message or messages may specify which particular award panels are to be unmasked. When the player unmasks the particular award panel the unmasked award symbol indicates the nature of the award won. Particular award symbols may indicate different awards or even indicate a loss.

In some embodiments, the generated message or the award symbol may indicate that a player needs to communicate additional information to redeem the award. The nature of the additional information and/or particular contact details for communicating said additional information may be contained in the generated message or messages, the award symbol or elsewhere on the scratch card.

According to a third aspect of the present invention there is provided a scratch card suitable for use with the system or method of the first or second aspects of the present invention, the scratch card comprising: one or more game codes; a contact number and one or more masked panels.

The scratch card of the third aspect of the present invention may incorporate any or all features of the first or second aspects as are desired or are appropriate.

In order that the invention is more clearly understood, a number of embodiments will be described in detail, by way of example only, with reference to the accompanying drawings in which:
- Figure 1: is a schematic diagram of a scratch card for use in the present invention; and
- Figure 2: is a schematic diagram of a system for implementing an interactive scratch card game according to the present invention.

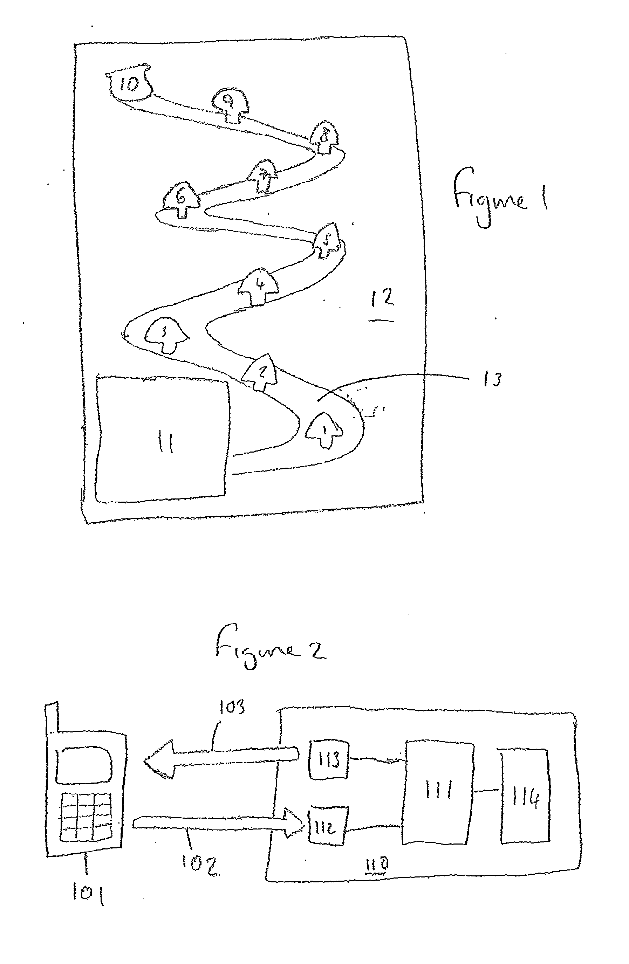

Referring initially to figure 1 a scratch card 12 for use in an interactive game comprises a plurality of masked panels 1-11 provided on a card 12. The masked panels 1-11 comprise metal foil that may be scratched off by a player. The panels 1-11 may have decorative patterns or identifying symbols or other information provided thereon. The unmasked portions of the surface of the card 12 may be printed with additional features such as illustrations or instructions. In the example shown this includes a trail 13 linking panels 1-11.

In the example shown panel 11 is a master panel. It is provided with an indication that it is to be scratched off first. The master panel 11 masks a game code and a contact number. Panels 1-10 by contrast are award panels and may have a decorative form in keeping with the scratch card 12. The award panels 1-10 mask symbols or the like relating to a particular prize.

Once master panel 11 is scratched off the player may then send an SMS message incorporating the game code to the contact number. In response the player will receive a message indicating: that the scratch card 12 is not a winner; or that the scratch card 12 is a winner and which of panels 1-10 should be unmasked to reveal the nature of the award; or that the player has won an award. In the event that the player has won, the received message or the scratch card 12 may contain instructions for redeeming the award and/or a request to communicate further details to claim the award.

The player may be charged for sending or receiving such messages by their network operator, a portion of such charges being passed on to the scratch card game operator. Awards may be credited by a player's network operator or may be paid in some other suitable manner.

A system 110 for implementing such an interactive scratch card game is shown in figure 2. The system 110 receives a message 102 incorporating a game code sent via a mobile communications network from a mobile telephone handset 101. The message 102 is received by a suitable receiver 112. The game code and message sender identity details are extracted from the message and sent to a control unit 111. If necessary a dedicated parser unit (not shown) may be provided for this purpose.

The control unit 111 performs a look up on the game code in memory means 114 to determine whether the game code is a winning game code. Following this determination, the control unit 111 extracts suitable information from memory means 114 to generate a message to the player indicating whether the game code is a winning game code or not and any further required information. The message 103 is transmitted to the identified sender 101 via a mobile communications network by transmitter 113.

In a preferred embodiment, the payment is made by reverse SMS billing. Herein, the control unit 111 generates a first payment instruction message in response to the communicated game code 102. The first payment instruction message contains SMS instructions including a contact number, a keyword and a reference. A copy of this first payment instruction message is stored in memory means 114. The player must then send an SMS to said contact number incorporating the keyword and reference; with some handsets 101 this may be achieved substantially automatically. This results in debits of the player's network account and a proportion of the debited sum being passed on to the game operator. In parallel, the SMS sent by the player is received and is compared by the control unit 111 to the version stored in the memory means 114 as an authentication check. Once the SMS message is authenticated, the control unit 111 proceeds to performing a look up on the game code as above.

In this manner, the above invention provides an interactive scratch card game for players and additionally provides means by which the play of said cards may be monitored.

It is of course to be understood that the invention is not intended to be limited to the details of the above embodiments which are described by way of example only.

## Claims

1. A system for implementing an interactive scratch card game wherein each scratch card is provided with one or more masked panels and at least one game code, the system comprising: a receiver suitable for receiving a communicated game code and identifying the sender thereof; control means for determining whether the game code is a winning game code and generating a suitable message in response thereto; and a message transmitter suitable for transmitting said generated message to the identified sender.

2. A system as claimed in claim 1 wherein the game code and or the generated messages are communicated via a mobile communications network.

3. A system as claimed in claim 1 or claim 2 wherein the game code is transmitted in a text or data based format and/or is communicated during a telephone call by voice recognition or tone recognition.

4. A system as claimed in claim 3 wherein the communicated game code and/or sender identity are extracted from extraneous information by means of a suitable parser unit.

5. A system as claimed in any preceding claim wherein a player is charged for communicating the game code and/or receiving a generated message.

6. A system as claimed in claim 5 wherein the charging is carried out by the player's network operator and/or awards are credited to a player's network account by the player's network operator.

7. A system as claimed in claim 6 wherein the charging is carried out by reverse SMS billing.

8. A system as claimed in any preceding claim wherein the masked panels each comprise metal foil provided over an area of the scratch card.

9. A system as claimed in any preceding claim wherein each panel masks a unique game code.

10. A system as claimed in any one of claims 1 to 9 wherein a single game code and/or the contact number are directly displayed on the scratch card or are provided behind a master masked panel.

11. A system as claimed in claim 10 wherein the scratch card also comprises a plurality of award panels, each panel masking an award symbol, the award symbols indicating whether or not an award has been won and/or the nature of the award.

12. A system as claimed in any preceding claim wherein there is a single generated message or a succession of generated messages, the generated message or messages indicating directly whether the scratch card is a winner.

13. A system as claimed in claim 11 wherein the generated message or messages direct a player to unmask one or more award panels and/or the generated message or messages specify which particular award panels are to be unmasked.

14. A system as claimed in claim 11 or claim 13 wherein the generated message and/or the award symbol indicate that a player needs to communicate additional information to redeem the award.

15. A system as claimed in claim 14 wherein the nature of the additional information and/or particular contact details for communicating said additional information are contained in the generated message or messages, the award symbol or elsewhere on the scratch card.

16. A method of running an interactive scratch card game comprising the steps of:
receiving a communicated game code; identifying the sender of the game code; determining whether the game code is a winning game code and generating a suitable message in response thereto; transmitting said generated message to the identified sender.

17. A method as claimed in claim 16 wherein the method is implemented by a system according to any one of claims 1 to 15.

18. A scratch card suitable for use with the system or method of any preceding claim, the scratch card comprising: one or more game codes; a contact number and one or more masked panels.
